# EUROPEAN PATENT APPLICATION

(11) **EP 4 586 284 A1**
(43) Date of publication of application: **16.07.2025**
(21) Application number: 24151022.1
(22) Date of filing: 09.01.2024
(51) Int. Cl.: H01B 17/30, F16B 5/00, H02B 1/21, H02G 5/02, H02G 5/06

(54) **BUS BAR BUSHING PLATE SYSTEM**

(71) Applicant: ABB SCHWEIZ AG, 5400 Baden (CH)
(72) Inventor: SKUCI, Michal, 602 00 Brno (CZ); VALENOVA, Ludmila, 568 02 Svitavy (CZ); HORAK, Jakub, 641 00 Brno (CZ); RZEPECKI, Michal, 30-633 Kraków (PL); WYSOCKI, Wojciech, 31-271 Kraków (PL); BEDNAROWSKI, Dariusz, 31-874 Kraków (PL); ROZWOD, Jakub, 37-600 Lubaczow (PL); OBAL, Pawel, 33-157 Malopolskie (PL)
(74) Representative: Maiwald GmbH

(57) **Abstract**

The present invention relates to a bus bar bushing plate system, comprising:
- a bushing plate (100); and
- a plurality of connectors (40, 120);
wherein the bushing plate is configured to be mounted to a metal sheet (50) having one or more openings, and wherein the mounting of the bushing plate to the metal sheet comprises utilization of the plurality of connectors;
wherein the bushing plate comprises three conduits;
wherein each of the three conduits is configured to hold one or more bus bars;
wherein when the bushing plate is mounted to the metal sheet, the one or more bus bars held by each of the three conduits pass through the one or more openings in the metal sheet; and
wherein a body of the bushing plate is formed from thermoplastic.

## Description

### FIELD OF THE INVENTION

The present invention relates to a bus bar bushing plate system, a bus bar compartment, and a switchgear.

### BACKGROUND OF THE INVENTION

In a medium voltage switchgear up to 17,5kV with metal sheets, Ethylene Propylene Diene Monomer (EPDM) inserts in an epoxy main bus bar (BB) Bushing Plate are important part of the panel. For 24kV three separated epoxy bushings, which contain field controller conected by springs, are used.

Presently, main bus bar bushing plates (or separate bushings) are mounted to a metal plate or sheet separating compartments of the switchgear by eight screws (with twelve screws being used for separate bushings). These form a barrier between the compartment, and where different types of bus bars are installed within the main bus bar bushing plates (or within separate bushings).

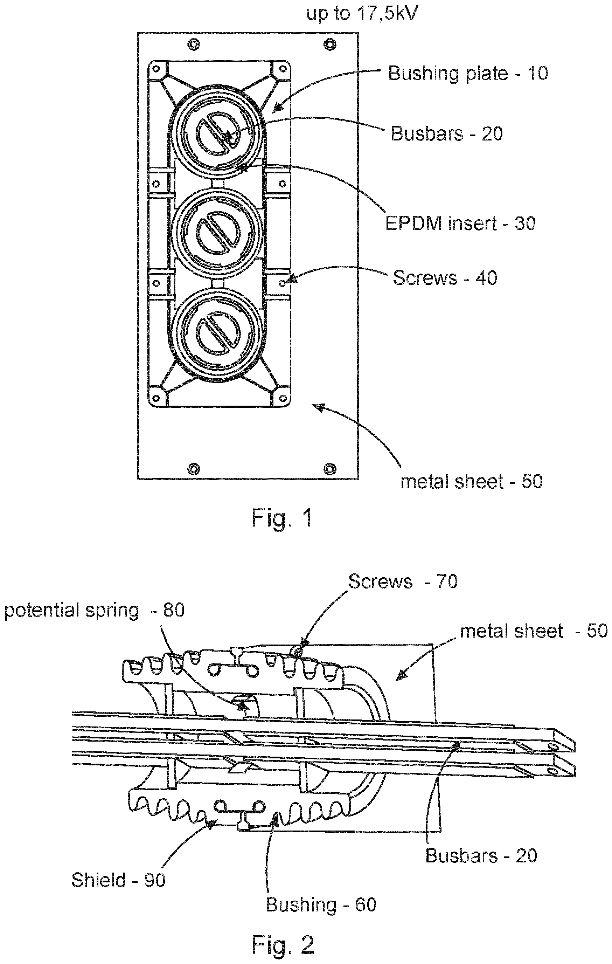

Fig. 1 shows a known system for fixing bus bars 20 between compartments of a switchgear, that is suitable for voltages up to 17.5kV. A metal sheet 50 is a wall between the compartments of the switchgear, and the busbars are to pass through hole(s) the metal sheet. An epoxy bushing plate 10 is fixed to the metal sheet 50 via 8 screws 40. The epoxy bushing plate has three conduits, for the three phases, each having an EPDM insert 30 that surrounds and claims the busbars 20 that pass through that conduit.

Fig. 2 shows another known system for fixing bus bars 20 between compartments of a switchgear, that is suitable for voltages up to 24kV. Again, metal sheet 50 is a wall between the compartments of the switchgear, and the busbars are to pass through hole the metal sheet. A bushing 60 is screwed to the metal sheet with screws 70 and surrounds and clamps the bus bars 20. The bushing has a shield 90 and potential spring 80, to provide for dielectric performance and shielding. There would be three such bushings, one for each phase.

Epoxy based Bulk Molding Compound (BMC) based technology bus bar bushing plates, or separate bushings, are expensive, not easy to manufacture, use a large amount of material, are large, and with a relatively large number of individual components being used for bus bar fixation.

There is a need to address these issues.

### SUMMARY OF THE INVENTION

Therefore, it would be advantageous to have an improved bus bar fixation technology between switchgear compartments.

The object of the present invention is solved with the subject matter of the independent claims, wherein further embodiments are incorporated in the dependent claims.

In a first aspect, there is provided a bus bar bushing plate system, comprising:
- a bushing plate; and
- a plurality of connectors.
The bushing plate is configured to be mounted to a metal sheet having one or more openings, and the mounting of the bushing plate to the metal sheet comprises utilization of the plurality of connectors. The bushing plate comprises three conduits. Each of the three conduits is configured to hold one or more bus bars. When the bushing plate is mounted to the metal sheet, the one or more bus bars held by each of the three conduits pass through the one or more openings in the metal sheet. A body of the bushing plate is formed from thermoplastic.

In an example, the plurality of connectors comprises a plurality of plastic pins or plastic screws or metal screws. The mounting of the bushing plate to the metal sheet comprises fixation of the plastic pins or the plastic screws or the metal screws into corresponding holes in the metal sheet.

In an example, the bushing plate comprises a plurality of holes. The mounting of the bushing plate to the metal sheet comprises the plastic pins or the plastic screws or the metal screws passing through the plurality of holes in the bushing plate into the corresponding holes in the metal sheet.

In an example, each of the plurality of holes in the bushing plate comprises an anti-creep spacer.

In an example, the bushing plate comprises a plurality of snap fit projections. The plurality of connectors comprises a plurality of snap fit connectors. The mounting of the bushing plate to the metal sheet comprises the snap fit projections extending through holes in the metal sheet from one side of the metal sheet and fixation of the plurality of snap fit connectors to corresponding snap fit projections from a second side of the metal sheet opposite to the first side.

In an example, the system comprises at least one metal sheet/plate. The bushing plate comprises at least one groove in at least one outer edge of the bushing plate. An edge of each metal sheet/plate is configured to slot into a corresponding groove in the outer edge of the bushing plate. The at least one metal sheet/plate is configured to connect to the metal sheet. The mounting of the bushing plate to the metal sheet comprises the edge of each additional metal sheet/plate being slotted into the corresponding groove in the outer edge of the bushing plate and the at least one additional metal sheet/plate being connected to the metal sheet.

In an example, each metal sheet/plate of the at least one metal sheet/plate is configured to be connected to the metal sheet via a plurality of plastic pins or plastic screws or metal screws.

In an example, an inside surface of each of the three conduits comprises a conductive coating.

In an example, the system comprises three inserts. Each of the three conduits is configured to hold the one or more bus bars via an insert of the three inserts located in each conduit, and the insert is configured to surround the one or more bus bars.

In an example, each insert comprises Ethylene Propylene Diene Monomer (EPDM).

In an example, the thermoplastic comprises thermoplastic glass reinforced composite.

In an example, the thermoplastic is an electrical insulator.

In a second aspect, there is provided a bus bar compartment comprising a bus bar system according to the first aspect.

In a third aspect, there is provided a switchgear comprising a bus bar system according to the first aspect.

The above aspect and examples will become apparent from and be elucidated with reference to the embodiments described hereinafter.

### BRIEF DESCRIPTION OF THE DRAWINGS

Exemplary embodiments will be described in the following with reference to the following drawing:
Fig. 1 shows a known bus bar epoxy bushing plate system;
Fig. 2 shows a known epoxy bushing;
Fig. 3 shows an example of a new bus bar bushing plate system;
Fig. 4 shows an example of a new bus bar bushing plate system;
Fig. 5 shows an example of a new bus bar bushing plate system; and

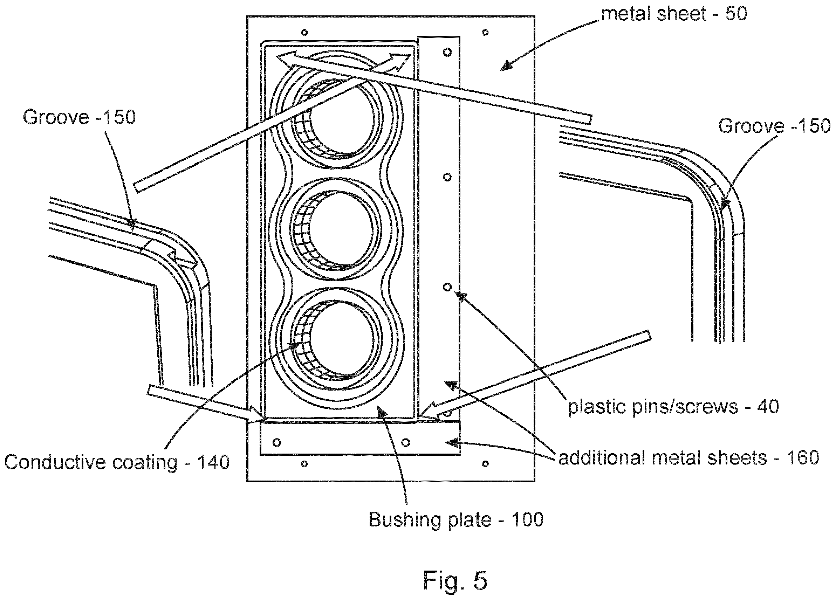

Fig. 5 shows an example of a new bus bar bushing plate system showing the application of a conductive coating with respect to a known bushing.

### DETAILED DESCRIPTION OF EMBODIMENTS

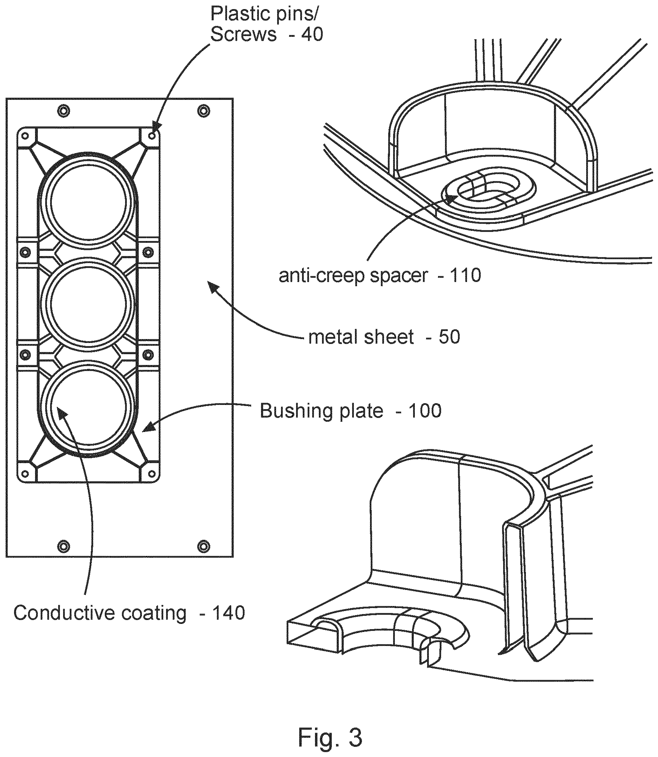

Figs. 3-6 relate to a new bus bar bushing plate system.

In an example a bus bar bushing plate system comprises:
- a bushing plate 100; and
- a plurality of connectors 40, 120.
The bushing plate is configured to be mounted to a metal sheet 50 having one or more openings, and the mounting of the bushing plate to the metal sheet comprises utilization of the plurality of connectors. The bushing plate comprises three conduits. Each of the three conduits is configured to hold one or more bus bars. When the bushing plate is mounted to the metal sheet, the one or more bus bars held by each of the three conduits pass through the one or more openings in the metal sheet. A body of the bushing plate is formed from thermoplastic.

In an example, the plurality of connectors comprises a plurality of plastic pins 40 or plastic screws 40 or metal screws 40. The mounting of the bushing plate to the metal sheet comprises fixation of the plastic pins or the plastic screws or the metal screws into corresponding holes in the metal sheet.

In an example, the bushing plate comprises a plurality of holes. The mounting of the bushing plate to the metal sheet comprises the plastic pins or the plastic screws or the metal screws passing through the plurality of holes in the bushing plate into the corresponding holes in the metal sheet.

In an example, each of the plurality of holes in the bushing plate comprises an anti-creep spacer 110.

In an example, the bushing plate comprises a plurality of snap fit projections 130. The plurality of connectors comprises a plurality of snap fit connectors 120. The mounting of the bushing plate to the metal sheet comprises the snap fit projections extending through holes in the metal sheet from one side of the metal sheet and fixation of the plurality of snap fit connectors to corresponding snap fit projections from a second side of the metal sheet opposite to the first side.

In an example, the system comprises at least one metal sheet/plate 160. The bushing plate comprises at least one groove 150 in at least one outer edge of the bushing plate. An edge of each metal sheet/plate is configured to slot into a corresponding groove in the outer edge of the bushing plate. The at least one metal sheet/plate is configured to connect to the metal sheet. The mounting of the bushing plate to the metal sheet comprises the edge of each additional metal sheet/plate being slotted into the corresponding groove in the outer edge of the bushing plate and the at least one additional metal sheet/plate being connected to the metal sheet.

In an example, each metal sheet/plate of the at least one metal sheet/plate is configured to be connected to the metal sheet via a plurality of plastic pins 40 or plastic screws 40 or metal screws 40.

In an example, an inside surface of each of the three conduits comprises a conductive coating 140.

In an example, the system comprises three inserts. Each of the three conduits is configured to hold the one or more bus bars via an insert of the three inserts located in each conduit, and the insert is configured to surround the one or more bus bars.

In an example, each insert comprises Ethylene Propylene Diene Monomer (EPDM).

In an example, the thermoplastic comprises thermoplastic glass reinforced composite.

In an example, the thermoplastic is an electrical insulator.

From the above description it is clear that a bus bar compartment can comprise a bus bar bushing plate system as described above.

From the above description it is clear that a switchgear can comprise a bus bar bushing plate system as described above.

The bus bar bushing plate system is now described in further specific detail.

Fig. 3 shows an example bus bar bushing plate system with anti-creep spacers 110 (assembled or overmolded), for use up to 17.5kV and up to 24kV with the conductive coating 140 on the inside of the conduits through the body of the bushing plate 100. The bushing plate 100 is a high performance thermoplastic glass reinforced composite that provides electrical insulation. The bushing plate has eight holes, each with an antcreep spacer 110, and where screws 40 pass through the holes and fix or mount the bushing plate to a metal sheet 50 between compartments of a switchgear. Bus bars 20 can then be fixed to the bushing plate 100 with EPDM inserts 30, as shown for example with respect to Fig. 1.

The bushing plate, being from thermoplastic rather than epoxy, can be thinner walled than existing designs, providing a lightweight design.

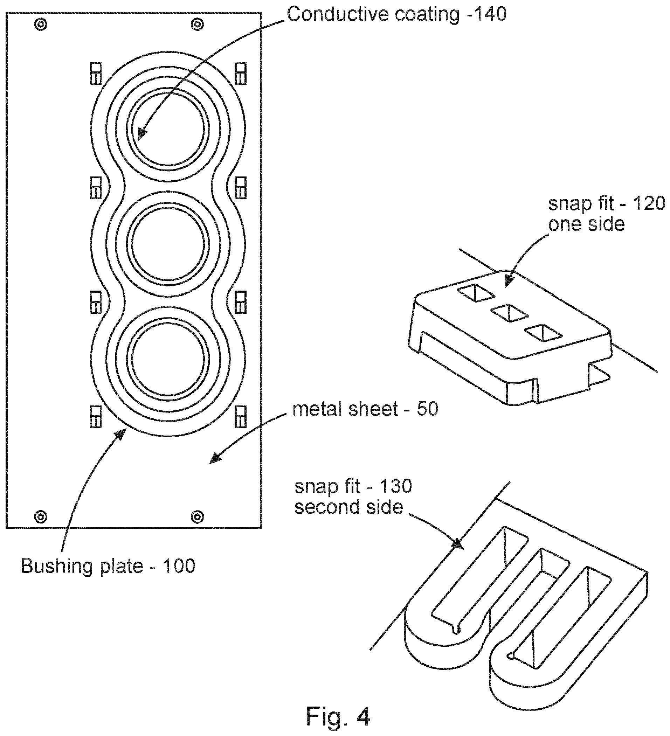

Fig. 4 shows an example bus bar bushing plate system for use up to 17.5kV (UniGear Digital) and up to 24kV (IEC 500) with sliders for assembly, where again a conductive coating 140 can be on the inside of the conduits through the body of the bushing plate 100. The bushing plate 100 does not have mounting holes in this example, but has snap fit projections 130 that extend from the bushing plate. These snap fit projections 130 go through holes in the metal sheet 50 between compartments of a switchgear, with snap fit connectors 120 then used from the other side of the metal sheet for fixation. The snap fit connectors 120 can have a sliding fit connection to the projections 130. The snap fit connectors 120 can also, or alternatively, have a sliding fit connection to the metal sheet 50. The snap fit projections 130 can also have a sliding fit with the metal sheet 50, and thus the snap fit projections 130 can connect to the metal sheet without snap fit connectors 120. Bus bars 20 can then be fixed to the bushing plate 100 with EPDM inserts 30, as shown for example with respect to Fig. 1.

This provides for fastener reduction, with only one component without a field controller or shield and springs (compared to the design of Fig. 2 that is otherwise required for 24kV operation), and where the conductive coating 140 can be used in the situation where partial discharge needs to be reduced.

Fig. 5 shows an example bus bar bushing plate system for use up to 17.5kV (UniGear Digital) and up to 24kV (IEC 500), where again a conductive coating 140 can be on the inside of the conduits through the body of the bushing plate 100. Here the bushing plate 100 has a groove 150 in the edge of the bushing plate. A number of additional metal sheets/plates 160 are then fixed to the metal sheet 50 that separates compartments, and before being fully tightly fixed in position the inner edges of the metal sheets/plates 160 are slotted into the groove 150. Then the metal sheets/plates are firmly fixed on the metal sheet 50, and the bushing plate is then itself firmly fixed in position, but requires no holes or projections, rather has an outer groove.

The groove around the bushing plate (flange) provides another mechanism where 24kV operation can be achieved without the need or separate bushings (as shown in Fig. 2). The conductive coating 140 can be used in the situation where partial discharge needs to be reduced.

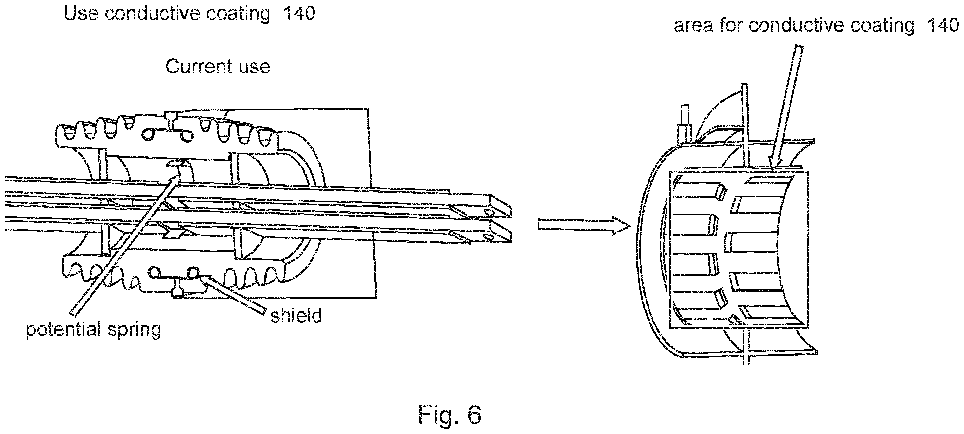

Fig. 6 then shows a pictorial representation of the application of the conductive coating 140.

The new design proivdes for:
Recyclable thermoplastic material
Silicone-free if needed
Lower weight and cost
Less material used and this CO₂ reduction as a result of less manufacturing
Fastener-less assembly
Less components
Larger opening for busbars assembly
Operation for 24kV within a single bushing plate rather than three separate bushings
Suited for mass production
Suited for high quality production
Ability to form complex shapes that can help reduce fasteners
Provide for thin walled designs
Proivde for increased dielectric performance, as steel fasteners are not requuired,
where standard steel fasteners shorted the air gap and have sharp edges that reduce the dielectric performance, issues mitigated by the new design.

## Claims

1. A bus bar bushing plate system, comprising:
- a bushing plate (100); and
- a plurality of connectors (40, 120);
wherein the bushing plate is configured to be mounted to a metal sheet (50) having one or more openings, and wherein the mounting of the bushing plate to the metal sheet comprises utilization of the plurality of connectors;
wherein the bushing plate comprises three conduits;
wherein each of the three conduits is configured to hold one or more bus bars;
wherein when the bushing plate is mounted to the metal sheet, the one or more bus bars held by each of the three conduits pass through the one or more openings in the metal sheet; and
wherein a body of the bushing plate is formed from thermoplastic.

2. Bus bar bushing plate system according to claim 1, wherein the plurality of connectors comprises a plurality of plastic pins (40) or plastic screws (40) or metal screws (40), and wherein the mounting of the bushing plate to the metal sheet comprises fixation of the plastic pins or the plastic screws or the metal screws into corresponding holes in the metal sheet.

3. Bus bar bushing plate system according to claim 2, wherein the bushing plate comprises a plurality of holes, and wherein the mounting of the bushing plate to the metal sheet comprises the plastic pins or the plastic screws or the metal screws passing through the plurality of holes in the bushing plate into the corresponding holes in the metal sheet.

4. Bus bar bushing plate system according to claim 3, wherein each of the plurality of holes in the bushing plate comprises an anti-creep spacer (110).

5. Bus bar bushing plate system according to claim 1, wherein the bushing plate comprises a plurality of snap fit projections (130), wherein the plurality of connectors comprises a plurality of snap fit connectors (120), and wherein the mounting of the bushing plate to the metal sheet comprises the snap fit projections extending through holes in the metal sheet from one side of the metal sheet and fixation of the plurality of snap fit connectors to corresponding snap fit projections from a second side of the metal sheet opposite to the first side.

6. Bus bar bushing plate system according to claim 1, wherein the system comprises at least one metal sheet/plate (160), wherein the bushing plate comprises at least one groove (150) in at least one outer edge of the bushing plate, wherein an edge of each metal sheet/plate is configured to slot into a corresponding groove in the outer edge of the bushing plate, wherein the at least one metal sheet/plate is configured to connect to the metal sheet, and wherein the mounting of the bushing plate to the metal sheet comprises the edge of each additional metal sheet/plate being slotted into the corresponding groove in the outer edge of the bushing plate and the at least one additional metal sheet/plate being connected to the metal sheet.

7. Bus bar bushing plate system according to claim 6, wherein each metal sheet/plate of the at least one metal sheet/plate is configured to be connected to the metal sheet via a plurality of plastic pins (40) or plastic screws (40) or metal screws (40).

8. Bus bar bushing plate system according to any of claims 1-7, wherein an inside surface of each of the three conduits comprises a conductive coating (140).

9. Bus bar bushing plate system according to any of claims 1-8, wherein the system comprises three inserts, wherein each of the three conduits is configured to hold the one or more bus bars via an insert of the three inserts located in each conduit, and wherein the insert is configured to surround the one or more bus bars.

10. Bus bar bushing plate system according to claim 9, wherein each insert comprises Ethylene Propylene Diene Monomer (EPDM).

11. Bus bar bushing plate system according to any of claims 1-10, wherein the thermoplastic comprises thermoplastic glass reinforced composite.

12. Bus bar bushing plate system according to any of claims 1-11, wherein the thermoplastic is an electrical insulator.

13. A bus bar compartment comprising a bus bar system according to any of claim 1-12.

14. A switchgear comprising a bus bar system according to any of claim 1-12.
